(19) Europäisches Patentamt
European Patent Office
Office européen des brevets

(11) EP 4 799 722 A1

(12) EUROPEAN PATENT APPLICATION
published in accordance with Art. 153(4) EPC

(43) Date of publication:
**02.09.2026 Bulletin 2026/36**

(21) Application number: **24882402.1**

(22) Date of filing: **23.10.2024**

(51) International Patent Classification (IPC):
***B01J 20/10*** *(2006.01)* ***B01D 15/00*** *(2006.01)*
***B01J 20/06*** *(2006.01)* ***B01J 20/08*** *(2006.01)*
***B01J 20/28*** *(2006.01)* ***B01J 20/30*** *(2006.01)*
***C01B 33/18*** *(2006.01)*

(52) Cooperative Patent Classification (CPC):
**B01D 15/00; B01J 20/06; B01J 20/08; B01J 20/10; B01J 20/28; B01J 20/30; C01B 33/18**

(86) International application number:
**PCT/JP2024/037653**

(87) International publication number:
**WO 2025/089291 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.10.2023 JP 2023181906**

(71) Applicant: **Mitsui Kinzoku Company, Limited**
**Tokyo 141-8584 (JP)**

(72) Inventor: **SUGAHARA Kosei**
**Ageo-shi, Saitama 362-0021 (JP)**

(74) Representative: **Novagraaf Technologies**
**2 rue Sarah Bernhardt**
**CS90017**
**92665 Asnières-sur-Seine Cedex (FR)**

(54) **ADSORBENT, METHOD FOR RECOVERING TARGET SUBSTANCE USING ADSORBENT, AND METHOD FOR MANUFACTURING ADSORBENT SUITABLE FOR MANUFACTURING ADSORBENT**

(57) A purpose of the present invention is to provide an adsorbent having excellent adsorption performance, a method for recovering a target substance using the adsorbent of the present invention, and a method for producing an adsorbent suitable for producing the adsorbent of the present invention, and, in order to achieve this purpose, the present invention provides an adsorbent comprising: a porous body having a co-continuous structure formed of: a ceramic skeleton (1) including mesopores (3); and macropores (2); and a sulfur atom-containing group that modifies a surface of the ceramic skeleton, wherein an amount of the sulfur atom-containing group contained in the adsorbent is 0.5 mmol/g or more and 3.5 mmol/g or less, and wherein a water absorption rate of the adsorbent is 8% or more.

[FIG. 1]



Processed by Luminess, 75001 PARIS (FR)

## Description

### FIELD OF INVENTION

The present invention relates to an adsorbent, a method for recovering a target substance using the adsorbent of the present invention, and a method for producing an adsorbent suitable for producing the adsorbent of the present invention.

### BACKGROUND ART

From the viewpoints of carbon neutrality, SDGs, and the like, technologies related to reuse or recovery of target substances have attracted attention. Examples of such technologies include technologies for recovering metals or metal ions contained in liquids. As an adsorbent used for recovering target substances such as metals and metal ions, particulate porous silica subjected to surface treatment is known. For example, Patent Document 1 describes particulate porous silica having a co-continuous structure formed of: a ceramic skeleton including mesopores; and macropores. Patent Document 1 also describes that porous silica, the surface of which is modified with functional groups such as a thiol group, is useful for recovering target substances such as metals and metal ions.

### CITATION LIST

PATENT DOCUMENT

Patent Document 1: International Publication No. WO 2017/002871

### SUMMARY OF INVENTION

TECHNICAL PROBLEM

A purpose of the present invention is to provide an adsorbent having excellent adsorption performance, a method for recovering a target substance using the adsorbent of the present invention, and a method for producing an adsorbent suitable for producing the adsorbent of the present invention.

SOLUTION TO PROBLEM

The present inventors have found:

that, in an adsorbent including a porous body having a co-continuous structure formed of: a ceramic skeleton including mesopores; and macropores, and a sulfur atom-containing group that modifies a surface of the ceramic skeleton, the adsorption performance of the adsorbent can be improved by adjusting the amount of the sulfur atom-containing group contained in the adsorbent to be 0.5 mmol/g or more and 3.5 mmol/g or less, and by adjusting the water absorption rate of the adsorbent to be 8% or more;
that, in a method for producing an adsorbent including a porous body having a co-continuous structure formed of: a ceramic skeleton including mesopores; and macropores, and a sulfur atom-containing group that modifies a surface of the ceramic skeleton, the hydrophilicity (i.e., water absorption rate) of the adsorbent can be increased, thereby improving the adsorption performance of the adsorbent, by bringing the porous body and a reagent for modifying the surface of the ceramic skeleton with the sulfur atom-containing group into contact with each other in water, or in an aqueous solution having a pH of 1 to 12, or in a mixed solution of an organic solvent and either an aqueous solution having a pH of 1 to 12 or water, wherein a ratio of a volume of the organic solvent in the mixed solution to a volume of the aqueous solution or water in the mixed solution is 0.5 or less. Based on these findings, the present invention has been completed. Accordingly, the present invention encompasses the following inventions.

[1] An adsorbent including:

a porous body having a co-continuous structure formed of: a ceramic skeleton including mesopores; and macropores; and
a sulfur atom-containing group that modifies a surface of the ceramic skeleton,
wherein an amount of the sulfur atom-containing group contained in the adsorbent is 0.5 mmol/g or more and 3.5 mmol/g or less, and

wherein a water absorption rate of the adsorbent is 8% or more.

[2] The adsorbent according to [1], wherein the sulfur atom-containing group includes a thiol group.
[3] The adsorbent according to [1] or [2], wherein a most frequent pore diameter of the macropores of the porous body is 200 nm or more and 5000 nm or less.
[4] The adsorbent according to any one of [1] to [3], wherein a ratio of a most frequent pore diameter of the macropores of the porous body to a most frequent pore diameter of the mesopores of the porous body is 15 or more and 300 or less.
[5] The adsorbent according to any one of [1] to [4], wherein the ceramic skeleton contains an element selected from silicon, aluminum, tin, cerium, titanium, and zirconium.
[6] The adsorbent according to any one of [1] to [5], wherein the sulfur atom-containing group is capable of adsorbing one or more substances selected from the group consisting of transition metals including rare-earth metals; metals and metalloids of Groups 13 to 16; transition-metal ions including rare-earth metal ions; and metal ions and metalloid ions of Groups 13 to 16.
[7] A method for recovering one or more target substances selected from the group consisting of metals, metal ions, metalloids, and metalloid ions from a solution containing the one or more target substances,
the method including a step of bringing the solution into contact with the adsorbent according to any one of [1] to [6].
[8] The method according to [7], wherein the one or more target substances are selected from the group consisting of transition metals including rare-earth metals; metals and metalloids of Groups 13 to 16; transition-metal ions including rare-earth metal ions; and metal ions and metalloid ions of Groups 13 to 16.
[9] A method for producing an adsorbent including:

a porous body having a co-continuous structure formed of: a ceramic skeleton including mesopores; and macropores; and
a sulfur atom-containing group that modifies a surface of the ceramic skeleton,
the method including a step of bringing the porous body and a reagent for modifying the surface of the ceramic skeleton with the sulfur atom-containing group into contact with each other in a solvent,
wherein the solvent is water, or an aqueous solution having a pH of 1 to 12, or a mixed solution of an organic solvent and either an aqueous solution having a pH of 1 to 12 or water, wherein a ratio of a volume of the organic solvent in the mixed solution to a volume of the aqueous solution or water in the mixed solution is 0.5 or less.

ADVANTAGEOUS EFFECTS OF INVENTION

According to the present invention, there are provided an adsorbent having excellent adsorption performance, a method for recovering a target substance using the adsorbent of the present invention, and a method for producing an adsorbent suitable for producing the adsorbent of the present invention.

## BRIEF DESCRIPTION OF DRAWINGS

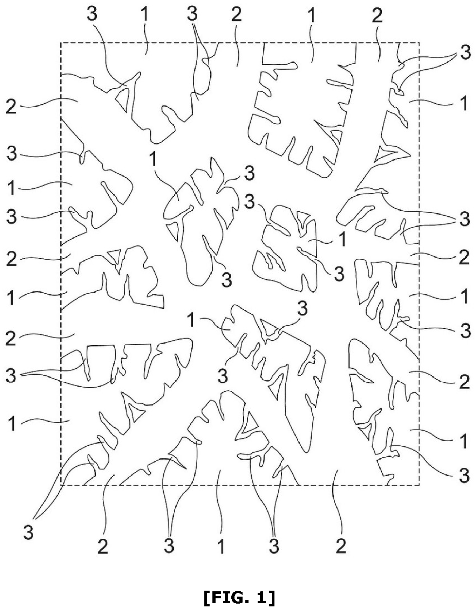

FIG. 1 is an enlarged view of a part of a surface of a porous body according to one embodiment of the present invention.

## DETAILED DESCRIPTION OF INVENTION

<<Definitions of Terms>>

The terms used in the present specification will be described below. Unless otherwise specified, the following descriptions apply throughout the present specification.

<Halogen Atom>

The term "halogen atom" includes a fluorine atom, a chlorine atom, a bromine atom, and an iodine atom.

<Alkyl Group>

The number of carbon atoms of an alkyl group is, for example, 1 to 20, preferably 1 to 10, more preferably 1 to 8, still more preferably 1 to 6, still more preferably 1 to 5, and still more preferably 1 to 4. The alkyl group may be linear or branched. The number of carbon atoms of a linear alkyl group is 1 or more, and the number of carbon atoms of a branched alkyl group is 3 or more.

<Aryl Group>

An aryl group is, for example, a monocyclic or polycyclic (e.g., bicyclic or tricyclic) aromatic hydrocarbon ring group. The number of carbon atoms of the aryl group is, for example, 6 to 14, preferably 6 to 10. The polycyclic ring may be a fused ring. Examples of the aryl group include a phenyl group and a naphthyl group. The aryl group is preferably a phenyl group.

<Arylalkyl Group>

An arylalkyl group is an alkyl group having one or more aryl groups, and the alkyl group and the aryl group are as described above. The number of aryl groups contained in the arylalkyl group is, for example, 1 to 3, preferably 1 or 2, and more preferably 1.

<Alkylaryl Group>

An alkylaryl group is an aryl group having one or more alkyl groups, and the alkyl group and the aryl group are as described above. The number of alkyl groups contained in the alkylaryl group is, for example, 1 to 3, preferably 1 or 2, and more preferably 1.

<Alkyloxy Group>

An alkyloxy group is a group represented by the formula: -O-alkyl group, and the alkyl group is as described above.

<Aryloxy Group>

An aryloxy group is a group represented by the formula: -O-aryl group, and the aryl group is as described above.

<Arylalkyloxy Group>

An arylalkyloxy group is a group represented by the formula: -O-arylalkyl group, and the arylalkyl group is as described above.

<Alkylaryloxy Group>

An alkylaryloxy group is a group represented by the formula: -O-alkylaryl group, and the alkylaryl group is as described above.

<Alkylcarbonyl Group>

An alkylcarbonyl group is a group represented by the formula: -CO-alkyl group, and the alkyl group is as described above.

<Arylcarbonyl Group>

An arylcarbonyl group is a group represented by the formula: -CO-aryl group, and the aryl group is as described above.

<Alkyloxycarbonyl Group>

An alkyloxycarbonyl group is a group represented by the formula: -COO-alkyl group, and the alkyl group is as described above.

<Aryloxycarbonyl Group>

An aryloxycarbonyl group is a group represented by the formula: -CO-O-aryl group, and the aryl group is as described above.

<Thiol Group>

A thiol group is a group represented by the formula: -SH.

<Alkylthio Group>

An alkylthio group is a group represented by the formula: -S-alkyl group, and the alkyl group is as described above.

<Arylthio Group>

An arylthio group is a group represented by the formula: -S-aryl group, and the aryl group is as described above.

<Arylalkylthio Group>

An arylalkylthio group is a group represented by the formula: -S-arylalkyl group, and the arylalkyl group is as described above.

<Alkylarylthio Group>

An alkylarylthio group is a group represented by the formula: -S-alkylaryl group, and the alkylaryl group is as described above.

<Alkylcarbonylthio Group>

An alkylcarbonylthio group is a group represented by the formula: -S-alkylcarbonyl group, and the alkylcarbonyl group is as described above.

<Arylcarbonylthio Group>

An arylcarbonylthio group is a group represented by the formula: -S-arylcarbonyl group, and the arylcarbonyl group is as described above.

<Alkyloxycarbonylthio Group>

An alkyloxycarbonylthio group is a group represented by the formula: -S-alkyloxycarbonyl group, and the alkyloxycarbonyl group is as described above.

<Aryloxycarbonylthio Group>

An aryloxycarbonylthio group is a group represented by the formula: -S-aryloxycarbonyl group, and the aryloxycarbonyl group is as described above.

<Alkylene Group and Arylene Group>

An alkylene group and an arylene group are bivalent functional groups obtained by removing one hydrogen atom from an alkyl group and an aryl group, respectively. The alkyl group and the aryl group are as described above.

<One or More Substituents>

The term "one or more substituents" refers to preferably 1 to 3 substituents, and more preferably 1 or 2 substituents. The one or more substituents may each independently be selected from, for example, a hydroxyl group, a carboxyl group, halogen atoms, a phosphate group, an oxo group, an alkyloxy group, an aryloxy group, an arylalkyloxy group, and an alkylaryloxy group.

<<Porous Body>>

The porous body has a co-continuous structure formed of: a ceramic skeleton including mesopores; and

macropores. The porous body will be described below.

<Form and Shape of Porous Body>

The form of the porous body is not particularly limited. Examples of the form of the porous body include a particle, an aggregate, and a shaped body. The shape of the porous body is not particularly limited. Examples of the shape of the porous body include columnar, spherical (e.g., true spherical and ellipsoidal spherical), needle-like, scaly (flake-like), polyhedral, flattened, ground, and aggregated shapes. Examples of the columnar shape include cylindrical, elliptic cylindrical, and polygonal columnar shapes (e.g., quadrangular columnar, hexagonal columnar, and octagonal columnar shapes). The columnar shape may be a shape where, for example, such a cylindrical, elliptic cylindrical, or polygonal columnar shape is partially cut off.

In a case where the porous body is in the form of a particle, the particle size is, for example, 0.5 μm or more and 7.0 mm or less. The "particle size" refers to an equivalent circle diameter, namely, the diameter of a circle assumed to have the same area as the area of the particle in an observed image (e.g., SEM image) of the particle. The particle size can be adjusted by, for example, classification.

In a case where the porous body is in the form of a columnar body, the length is, for example, 1.0 mm or more and 500 mm or less, and the diameter is, for example, 1.5 mm or more and 20 mm or less. The "length" refers to the dimension in the direction in which the columnar body extends. The "diameter" refers to the diameter of an end face in the extension direction of the columnar body. In a case where the end face is circular, the "diameter" refers to the diameter of the circular end face. In a case where the end face has a shape other than a circular shape, the "diameter" refers to the diameter of a circle circumscribed around the end face.

<Structure of Porous Body Before Modification>

Hereinafter, a structure of a porous body before modification with a sulfur atom-containing group will be described with reference to FIG. 1. FIG. 1 is an enlarged view of a part of a surface of a porous body according to one embodiment of the present invention.

As illustrated in FIG. 1, the porous body has a co-continuous structure formed of: a ceramic skeleton 1 including mesopores 3; and macropores 2.

In the porous body, the ceramic skeleton 1 and the macropores 2 each have a continuous three-dimensional network structure and are intertangled with each other, thereby forming the co-continuous structure of the ceramic skeleton 1 and the macropores 2. The fact that the porous body has the co-continuous structure of the ceramic skeleton 1 and the macropores 2 can be confirmed by observing a surface or cross section of the porous body with a scanning electron microscope (SEM).

The most frequent pore diameter of the macropores 2 is preferably 200 nm or more, more preferably 400 nm or more, and still more preferably 600 nm or more, from the viewpoint of enhancement in adsorption performance. The most frequent pore diameter of the macropores 2 is preferably 5000 nm or less, more preferably 4000 nm or less, and still more preferably 3000 nm or less, from the same viewpoint. Each of these upper limit values may be combined with any of the lower limit values described above.

The "most frequent pore diameter of the macropores 2" refers to the most frequent pore diameter of the macropores, measured in a pore diameter range of 50 nm to 500 μm by a mercury intrusion method, as described in the Examples below.

The most frequent pore diameter of the mesopores 3 is preferably 2.0 nm or more, more preferably 5.0 nm or more, and still more preferably 10.0 nm or more, from the viewpoint of enhancement in adsorption performance. The most frequent pore diameter of the mesopores 3 is preferably 50.0 nm or less, more preferably 40.0 nm or less, and still more preferably 35.0 nm or less, from the same viewpoint. Each of these upper limit values may be combined with any of the lower limit values described above.

The "most frequent pore diameter of the mesopores 3" refers to the most frequent pore diameter of the mesopores, measured from a nitrogen adsorption-desorption isotherm by a BJH method, as described in the Examples below.

The ratio of the most frequent pore diameter of the macropores 2 to the most frequent pore diameter of the mesopores 3 is preferably 15 or more, more preferably 20 or more, still more preferably 30 or more, and still more preferably 40 or more, from the viewpoint of enhancement in adsorption performance. The ratio is preferably 300 or less, more preferably 200 or less, still more preferably 150 or less, and still more preferably 100 or less, from the same viewpoint. Each of these upper limit values may be combined with any of the lower limit values described above.

The specific surface area of the porous body, measured from a nitrogen adsorption-desorption isotherm by a BET method, is preferably 100 $m^2/g$ or more, more preferably 120 $m^2/g$ or more, and still more preferably 130 $m^2/g$ or more, from the viewpoint of enhancement in adsorption performance. The upper limit of the specific surface area of the porous body is

not particularly limited. The method of measuring the specific surface area from a nitrogen adsorption-desorption isotherm by a BET method is as described in the Examples below.

The total pore volume of the porous body, measured by a mercury intrusion method, is preferably 1.5 mL/g or more and 4.0 mL/g or less, more preferably 1.8 mL/g or more and 3.5 mL/g or less, and still more preferably 2.5 mL/g or more and 3.5 mL/g or less, from the viewpoint of enhancement in adsorption performance. The method of measuring the total pore volume by a mercury intrusion method is as described in the Examples below.

The porosity of the porous body, measured by a mercury intrusion method, is preferably 70% or more and 90% or less, more preferably 70% or more and 85% or less, and still more preferably 75% or more and 85% or less, from the viewpoint of enhancement in adsorption performance. The method of measuring the porosity by a mercury intrusion method is as described in the Examples below.

<Material of Porous Body>

The ceramic constituting the ceramic skeleton is, for example, an oxide ceramic containing a metalloid element or a metal element. The ceramic skeleton 1 may contain one element selected from metalloid elements and metal elements, or may contain two or more elements selected from metalloid elements and metal elements.

Examples of the metalloid element include silicon. Examples of a silicon-containing oxide ceramic include silica ($SiO_2$).

Examples of the metal element include aluminum, tin, and transition metal elements such as cerium, titanium, zirconium, vanadium, chromium, iron, cobalt, nickel, palladium, platinum, copper, silver, gold, and zinc. Among these, the metal element is preferably selected from aluminum, tin, cerium, titanium, and zirconium, from the viewpoint of ease of production of the porous body. Examples of the oxide ceramic containing aluminum, tin, cerium, titanium, or zirconium include alumina ($Al_2O_3$), tin oxide ($SnO_2$), ceria ($CeO_2$), titania ($TiO_2$), and zirconia ($ZrO_2$).

The oxide ceramic may further contain, in addition to silicon, aluminum, tin, or a transition metal element, any element selected from alkali metal elements such as lithium and sodium, alkaline earth metal elements such as magnesium and calcium, and rare earth elements such as lanthanum, scandium, yttrium, and gadolinium.

<Method for Producing Porous Body >

The porous body can be produced, for example, by a method including the following steps of:

(a) producing a polymetalloxane gel by a sol-gel method;
(b) forming pores in a skeleton of the polymetalloxane gel produced in step (a); and
(c) firing the polymetalloxane gel subjected to step (b), optionally after washing and/or drying the polymetalloxane gel, to thereby produce a ceramic monolith (porous body). Hereinafter, each step will be described.

Step (a)

In step (a), a polymetalloxane gel is produced by a sol-gel method.

Polymetalloxane is an inorganic polymer having a metalloxane bond as a main chain backbone. The metalloxane bond is a bond of a metalloid element or a metal element with an oxygen atom, namely, a M-O bond (wherein M represents a metalloid element or a metal element).

Examples of the metalloid element represented by M include silicon. Examples of the metal element represented by M include aluminum, tin, cerium, titanium, zirconium, vanadium, chromium, iron, cobalt, nickel, palladium, platinum, copper, silver, gold, and zinc. Aluminum, tin, cerium, titanium, or zirconium is preferable from the viewpoint of ease of production of the porous body.

The sol-gel method can be performed according to a conventional method. One example of the sol-gel method is as follows.

The sol-gel method includes a sol producing step and a gel producing step.

In the sol producing step, a reaction solution containing a ceramic precursor, a catalyst, and a macropore forming agent is stirred to thereby produce a sol.

The ceramic precursor is not particularly limited as long as it can form a polymetalloxane gel.

The ceramic precursor is, for example, a metalloid compound (e.g., a silicon compound) having a hydroxy group and/or a hydrolyzable functional group, or a metal compound (e.g., an aluminum compound, a tin compound, a cerium compound, a titanium compound, or a zirconium compound) having a hydroxy group and/or a hydrolyzable functional group. The total number of the hydroxy group and the hydrolyzable functional group in the ceramic precursor may be 1 or 2, and is preferably 3 or more, and more preferably 4, from the viewpoint of producing a polymetalloxane gel having a highly crosslinked structure by a metalloxane bond (M-O bond). When the ceramic precursor has two or more hydrolyzable

functional groups, the types of the two or more hydrolyzable functional groups may be the same or different.

The "hydrolyzable functional group" refers to a functional group that is converted to a hydroxy group by hydrolysis. Examples of the hydrolyzable functional group include an alkyloxy group, an acetoxy group, a halide group, and a hydrido group, and an alkyloxy group is preferable. The alkyloxy group is preferably an alkyloxy group having 1 to 10 carbon atoms, more preferably an alkyloxy group having 1 to 5 carbon atoms, and still more preferably a methoxy group, an ethoxy group, or a propoxy group. The alkyloxy group may be linear or branched.

The ceramic precursor may have a functional group other than the hydroxy group and the hydrolyzable functional group. Examples of the functional group other than the hydroxy group and the hydrolyzable functional group include an alkyl group, an alkenyl group, a phenyl group, a phenoxy group, a carboxyl group, an epoxy group, an aldehyde group, a thiol group, an amino group, an acryloyl group, and a methacryloyl group. The alkyl group is preferably an alkyl group having 1 to 10 carbon atoms, more preferably an alkyl group having 1 to 5 carbon atoms, and still more preferably a methyl group, an ethyl group, or a propyl group. The alkyl group may be linear or branched. The alkenyl group is preferably an alkenyl group having 2 to 10 carbon atoms, more preferably an alkenyl group having 2 to 5 carbon atoms, and still more preferably a vinyl group. The alkenyl group may be linear or branched.

The silicon compound having the hydroxy group and/or the hydrolyzable functional group is preferably an alkoxysilane. Examples of the alkoxysilane include tetraalkoxysilane, trialkoxysilane, dialkoxysilane, and monoalkoxysilane. Among these, tetraalkoxysilane is preferable from the viewpoint of facilitating the progress of hydrolysis reaction and polycondensation reaction. Examples of the tetraalkoxysilane include tetramethoxysilane and tetraethoxysilane.

The aluminum compound having the hydroxy group and/or the hydrolyzable functional group is preferably, for example, aluminum hydroxide or aluminum alkoxide.

The tin compound having the hydroxy group and/or the hydrolyzable functional group is preferably, for example, tin hydroxide or tin alkoxide.

The cerium compound having the hydroxy group and/or the hydrolyzable functional group is preferably, for example, cerium hydroxide or cerium alkoxide.

The titanium compound having the hydroxy group and/or the hydrolyzable functional group is preferably, for example, titanium alkoxide. Examples of the titanium alkoxide include titanium monoalkoxide, titanium dialkoxide, titanium trialkoxide, and titanium tetraalkoxide. Among these, titanium tetraalkoxide is preferable from the viewpoint of facilitating the progress of hydrolysis reaction and polycondensation reaction. Examples of the titanium tetraalkoxide include titanium tetraisopropoxide.

The zirconium compound having the hydroxy group and/or the hydrolyzable functional group is preferably zirconium alkoxide. Examples of the zirconium alkoxide include zirconium monoalkoxide, zirconium dialkoxide, zirconium trialkoxide, and zirconium tetraalkoxide. Among these, zirconium tetraalkoxide is preferable from the viewpoint of facilitating the progress of hydrolysis reaction and polycondensation reaction. Examples of the zirconium tetraalkoxide include zirconium tetraisopropoxide.

The ceramic precursor may be a metal salt (e.g., an aluminum salt, a tin salt, or a cerium salt) that is converted to a hydroxide through hydrolysis. Examples of the aluminum salt include aluminum nitrate, aluminum sulfate, and aluminum chloride. Examples of the tin salt include tin nitrate, tin sulfate, and tin chloride. Examples of the cerium salt include cerium nitrate, cerium sulfate, and cerium chloride. Among these, aluminum chloride, tin chloride, or cerium chloride is preferable from the viewpoint of facilitating the progress of hydrolysis reaction and polycondensation reaction.

The catalyst serves as a catalyst for hydrolysis reaction. Examples of the catalyst include an acid and a base. Examples of the acid include inorganic acids such as hydrochloric acid, sulfuric acid, and nitric acid; and organic acids such as formic acid, acetic acid, oxalic acid, and citric acid. Examples of the base include sodium hydroxide, potassium hydroxide, ammonia water, sodium carbonate, sodium hydrogen carbonate, amines such as trimethylammonium, ammonium hydroxides such as tert-butylammonium hydroxide, and alkali metal alkoxides such as sodium methoxide.

The macropore forming agent contributes to the formation of macropores in a ceramic monolith. Examples of the macropore forming agent include a water-soluble polymer and a surfactant. Among these, the water-soluble polymer is preferable. The water-soluble polymer induces the sol-gel transition accompanied by a phase separation process (typically spinodal decomposition), and contributes to the formation of a co-continuous structure of a skeleton phase and a solvent phase in a gel, and thus to the formation of macropores in a ceramic monolith.

Examples of the water-soluble polymer include polyalkylene glycols such as polyethylene glycol and polypropylene glycol, polyacrylic acid, a polyethylene glycol-polypropylene glycol block copolymer, polyvinylpyrrolidone, polystyrenesulfonic acid sodium salt, and polyallylamine hydrochloride.

The weight average molecular weight of the water-soluble polymer is preferably 8000 or more and 15000 or less from the viewpoint of efficiently performing a phase separation process (typically spinodal decomposition). The weight average molecular weight is measured by GPC (gel permeation chromatography).

Examples of the surfactant include cationic surfactants such as cetyltrimethylammonium chloride, anionic surfactants such as sodium dodecyl sulfate, and non-ionic surfactants such as polyoxyethylene alkyl ether.

When the ceramic precursor is a metalloid compound, the reaction solution may include a mesopore forming

agent. The mesopore forming agent contributes to the formation of mesopores in a ceramic monolith. Examples of the mesopore forming agent include a nitrogen compound. Examples of the nitrogen compound usable as the mesopore forming agent include amide compounds such as urea, formamide, N-methylformamide, N,N-dimethylformamide, acetamide, N-methylacetamide, and N,N-dimethylacetamide; and heterocyclic compounds such as hexamethylenetetramine. Among these, urea is preferable from the viewpoint of efficient mesopore formation.

The reaction solution may contain one solvent or may contain two or more solvents. Examples of the solvent include water, an organic solvent, and a mixed solvent of water and an organic solvent. Examples of the organic solvent include alcohols such as methanol, ethanol, propanol, and butanol; and ketones such as acetone and methyl ethyl ketone. When the solvent is a mixed solvent of water and an organic solvent, the content of the organic solvent is preferably 65 % by mass or less, based on the mass of the mixed solvent.

The reaction solution is preferably prepared by adding the ceramic precursor to a mixed liquid containing the catalyst, the macropore forming agent, and optionally the mesopore forming agent, from the viewpoint of appropriately controlling a reaction start point. The reaction is started by adding the ceramic precursor to the mixed liquid containing the catalyst, the macropore forming agent, and optionally the mesopore forming agent.

When the reaction solution is stirred, the reaction solution may be cooled. The cooling of the reaction solution is performed so that the temperature of the reaction solution becomes, for example, a temperature that facilitates the progression of the sol-gel transition accompanied by a phase separation process (typically spinodal decomposition), preferably 60°C or less, more preferably 40°C or less. The lower limit is around a temperature at which the reaction solution is not frozen, and is, for example, about 1°C.

For example, when tetramethoxysilane, which corresponds to the metalloid compound having the hydrolyzable functional group, is used as the ceramic precursor, the above cooling is preferably performed.

The reaction solution forms a sol according to the progress of hydrolysis reaction and polycondensation reaction progress.

In the hydrolysis reaction, the hydrolyzable functional group in the ceramic precursor is hydrolyzed to thereby form a hydroxy group. In the polycondensation reaction, a metalloxane oligomer is formed by a dehydration condensation reaction between hydroxy groups and a dealcoholization condensation reaction between a hydroxy group and a hydrolyzable functional group that has not been hydrolyzed. For example, when the ceramic precursor is the silicon compound having the hydrolyzable functional group, a siloxane oligomer is formed by a dehydration condensation reaction shown in the following formula (1) and a dealcoholization condensation reaction shown in the following formula (2). In the following formula (2), -OR represents a hydrolyzable functional group that has not been hydrolyzed.

$$\equiv\text{Si-OH} + \text{HO-Si}\equiv \text{->} \equiv\text{Si-O-Si}\equiv + H_2O \qquad (1)$$

$$\equiv\text{Si-OR} + \text{HO-Si}\equiv \text{->} \equiv\text{Si-O-Si}\equiv + \text{ROH} \qquad (2)$$

When the hydrolysis reaction and the polycondensation reaction further progress, nanometer-sized primary particles of the metalloxane oligomer are formed, and the aggregation of the primary particles leads to the formation of secondary particles. Thus, the reaction solution forms a sol.

In the gel producing step, optionally after a mold for shaping is added to the sol produced in the sol producing step, the sol is heated to a gelation temperature to thereby produce a polymetalloxane gel. In the gel producing step, the hydrolysis reaction and the polycondensation reaction further progress to thereby form a metalloxane polymer, and the sol-gel transition accompanied by a phase separation process (typically spinodal decomposition) is induced to thereby produce a polymetalloxane gel (wet gel). The produced polymetalloxane gel has a co-continuous structure of a skeleton phase and a solvent phase. The skeleton phase is rich in the metalloxane polymer generated by the hydrolysis reaction and the polycondensation reaction, and the solvent phase is rich in the solvent. The skeleton phase and the solvent phase each have a continuous three-dimensional network structure and are entangled with each other, thereby forming the co-continuous structure of the skeleton phase and the solvent phase.

The mold for shaping is a mold for shaping a gel into a desired shape. Examples of the material of the mold include synthetic resins such as polystyrene, polyethylene, polypropylene, polyethylene terephthalate (PET), polycarbonate (PC), silicone, and polytetrafluoroethylene (PTFE), and metals such as aluminum and stainless steel.

The gelation temperature is preferably 20°C or more and 80°C or less, more preferably 25°C or more and 40°C or less, from the viewpoint of appropriately forming the co-continuous structure of the skeleton phase and the solvent phase in the gel. The heating time at the gelation temperature is preferably 4 hours or more and 24 hours or less.

Step (b)

In step (b), pores are formed in a skeleton of the polymetalloxane gel produced in step (a).

The formation of pores in the skeleton of the polymetalloxane gel can be performed according to a conventional

method. When pores are formed in the skeleton of the polymetalloxane gel, the polymetalloxane gel produced in step (a) and a mesopore forming agent may be reacted, if necessary.

The description of the mesopore forming agent is the same as described above. The mesopore forming agent may be contained in the polymetalloxane gel produced in step (a), may be contained in the reaction solution containing the polymetalloxane gel and the mesopore forming agent, or may be contained in both. In step (b), pores (which become mesopores in a ceramic monolith) are formed in the skeleton of the gel. The reaction solution may contain one or two or more solvents. The description of the solvent is the same as described above.

When the polymetalloxane gel and the mesopore forming agent are reacted, both may be reacted under heating and refluxing.

The heating temperature under heating and refluxing is preferably 50°C or more and 120°C or less. The heating time under heating and refluxing is preferably 1 hour or more and 36 hours or less, and more preferably 4 hours or more and 24 hours or less.

When the metalloid compound having the hydrolyzable functional group is used as the ceramic precursor, it is preferable to react the polymetalloxane gel and the mesopore forming agent under heating and refluxing.

Step (c)

In step (c), the polymetalloxane gel subjected to step (b) is fired, optionally after washing and/or drying the polymetalloxane gel, to thereby produce a ceramic monolith.

Examples of a washing liquid used for the washing include water, an organic solvent, a mixed solvent of water and an organic solvent, and an aqueous solution containing an acid or a base. Examples of the organic solvent include alcohols such as methanol, ethanol, n-propanol, 2-propanol (IPA), and butanol. Examples of the acid include hydrochloric acid, sulfuric acid, nitric acid, hydrofluoric acid, acetic acid, formic acid, carbonic acid, citric acid, and phosphoric acid. Examples of the base include sodium hydroxide, potassium hydroxide, ammonia, water-soluble amines, sodium carbonate, and sodium hydrogen carbonate.

Examples of a method for the drying include natural drying, drying by heating, drying using a solvent having low surface tension, drying by freezing and sublimation, and supercritical drying.

In the firing, the firing temperature is preferably 500°C or more and 1000°C or less, more preferably 600°C or more and 800°C or less, and the firing time is preferably 1 hour or more and 8 hours or less, more preferably 3 hours or more and 5 hours or less. The firing is usually performed under an air atmosphere.

The ceramic monolith has a co-continuous structure formed of: a ceramic skeleton including mesopores; and macropores. The ceramic skeleton of the ceramic monolith is formed from the skeleton phase of the polymetalloxane gel, and the macropores of the ceramic monolith are formed from the solvent phase of the polymetalloxane gel.

In one embodiment, the ceramic monolith is a silica monolith. The silica monolith has a co-continuous structure formed of: a silica skeleton including mesopores; and macropores.

In another embodiment, the ceramic monolith can be a monolith of alumina, tin oxide, ceria, titania, or zirconia. Also in such a case, the monolith has a co-continuous structure formed of: a skeleton of alumina, tin oxide, ceria, titania, or zirconia including mesopores; and macropores.

The ceramic monolith thus produced may be shaped and used as an adsorbent (e.g., an adsorbent having the shape of a columnar body). Alternatively, a shaped ceramic monolith produced using a mold or the like may be used as is or, if necessary, shaped and used as an adsorbent (e.g., an adsorbent having the shape of a columnar body). For example, the shaped ceramic monolith can be produced using a mold for shaping the gel into a desired shape in the gel producing step. The average diameter of the shaped ceramic monolith is smaller than the average diameter of the mold.

The ceramic monolith thus produced may be pulverized and used as an adsorbent. The pulverization can be performed according to a conventional method. The pulverization can be performed using, for example, a mortar, a hammer mill, a ball mill, a bead mill, a jet mill, or a roller mill. The particle size of the adsorbent after pulverization is preferably 0.5 μm or more and 7.0 mm or less, more preferably 2.0 μm or more and 5.0 mm or less, and still more preferably 5.0 μm or more and 3.0 mm or less. The "particle size" refers to an equivalent circle diameter, namely, the diameter of a circle assumed to have the same area as the area of the adsorbent after pulverization in an observed image (e.g., SEM image) of the adsorbent after pulverization.

<<Adsorbent>>

The adsorbent of the present invention includes a porous body having a co-continuous structure formed of: a ceramic skeleton including mesopores; and macropores, and a sulfur atom-containing group that modifies a surface of the ceramic skeleton. The adsorbent of the present invention will be described below.

<Surface Modification>

The surface of the ceramic skeleton is modified with a sulfur atom-containing group. The surface of the ceramic skeleton may be modified with one sulfur atom-containing group or with two or more sulfur atom-containing groups. The sulfur atom-containing group may be directly bonded to the surface of the ceramic skeleton, or may be bonded to the surface of the ceramic skeleton via a linker.

The surface of the ceramic skeleton includes an internal surface and an external surface of the ceramic skeleton. The internal surface of the ceramic skeleton includes the internal surfaces of macropores and mesopores present inside the ceramic skeleton (i.e., not exposed on the external surface of the ceramic skeleton). The external surface of the ceramic skeleton includes the internal surfaces of macropores and mesopores exposed on the external surface of the ceramic skeleton. It is preferable that at least the internal surface of the ceramic skeleton be modified with the sulfur atom-containing group.

The sulfur atom-containing group is not particularly limited as long as it is a group containing a sulfur atom. The sulfur atom-containing group may be a monovalent group or a divalent group. Examples of the sulfur atom-containing group include a group containing $-S_x-$. The sulfur atom-containing group may consist of $-S_x-$. x is, for example, an integer of 1 to 8, preferably an integer of 1 to 5, and more preferably an integer of 1 to 2. Examples of $-S_x-$ include a sulfide group (-S-), a disulfide group (-S-S-), a trisulfide group (-S-S-S-), and a tetrasulfide group (-S-S-S-S-).

The sulfur atom-containing group is preferably a group containing at least one member selected from the group consisting of a thiol group, an alkylthio group optionally having one or more substituents, an arylthio group optionally having one or more substituents, an arylalkylthio group optionally having one or more substituents, an alkylarylthio group optionally having one or more substituents, an alkylcarbonylthio group optionally having one or more substituents, an arylcarbonylthio group optionally having one or more substituents, an alkyloxycarbonylthio group optionally having one or more substituents, and an aryloxycarbonylthio group optionally having one or more substituents. The sulfur atom-containing group is more preferably a group containing at least one member selected from a thiol group and an alkylthio group optionally having one or more substituents. The sulfur atom-containing group is still more preferably a group containing a thiol group. The sulfur atom-containing group may consist of a group selected from the above-described group. In each of the arylalkylthio group and the alkylarylthio group, the alkyl moiety and/or the aryl moiety may have one or more substituents.

In one embodiment, a compound having at least one sulfur atom-containing group (hereinafter, also referred to as a "sulfur atom-containing compound") is fixed to the surface of the ceramic skeleton, whereby the surface of the ceramic skeleton is modified with at least one sulfur atom-containing group. Examples of methods for introducing the sulfur atom-containing compound onto the surface of the ceramic skeleton include a method involving chemically fixing the sulfur atom-containing compound (e.g., a silane coupling agent having at least one sulfur atom-containing group (hereinafter, also referred to as a "sulfur atom-containing silane coupling agent")) to the surface of the ceramic skeleton via a covalent bond, and a method involving physically fixing the sulfur atom-containing compound to the surface of the ceramic skeleton through an ionic bonding or physical interactions such as hydrophobic interactions. Examples of methods for chemically introducing the sulfur atom-containing compound onto the surface of the ceramic skeleton include a method involving reacting a functional group (e.g., a hydroxyl group) on the surface of the ceramic skeleton with a sulfur atom-containing silane coupling agent to thereby chemically fix the silane coupling agent to the surface of the ceramic skeleton. The sulfur atom-containing compound may be fixed to the surface of the ceramic skeleton via a linker. For example, a functional group reactive with the sulfur atom-containing compound may be introduced onto the surface of the ceramic skeleton, and thereafter the introduced functional group and the sulfur atom-containing compound may be reacted to thereby chemically fix the sulfur atom-containing compound to the surface of the ceramic skeleton. Examples of methods for introducing a functional group reactive with the sulfur atom-containing compound onto the surface of the ceramic skeleton include a method involving reacting a functional group (e.g., a hydroxyl group) on the surface of the ceramic skeleton with a silane coupling agent having a functional group reactive with the sulfur atom-containing compound to thereby chemically fix the silane coupling agent to the surface of the ceramic skeleton. Examples of the silane coupling agent having a functional group reactive with the sulfur atom-containing compound include a silane coupling agent having an epoxy group and/or a haloalkyl group. Examples of the silane coupling agent having an epoxy group include 3-glycidyloxypropyltrimethoxysilane. Examples of the silane coupling agent having a haloalkyl group include 3-chloropropyltrimethoxysilane.

In the compound having at least one sulfur atom-containing group, portions other than the sulfur atom-containing group may be composed of hydrogen atoms and carbon atoms, or may contain, in addition to hydrogen atoms and carbon atoms, one or more additional elements (e.g., oxygen atoms, nitrogen atoms, halogen atoms, silicon atoms, and the like).

As the compound having at least one sulfur atom-containing group, one compound may be used, or two or more compounds may be used. The compound having at least one sulfur atom-containing group may be a silane coupling agent.

Examples of silane coupling agents having at least one sulfur atom-containing group include silane coupling agents represented by Formula A, Formula B, Formula C, Formula D, or Formula E.

Formula A: $R^a\text{-}R^d\text{-}Si(\text{-}R^b)_n(\text{-}R^c)_{3-n}$

Formula B: $R^a\text{-}R^d\text{-}Si(\text{-}O\text{-}(R^e\text{-}O)_m\text{-}R^f)_n(\text{-}R^c)_{3-n}$

Formula C: $Si(\text{-}R^g)_q(\text{-}R^h)_{3-q}\text{-}R^i\text{-}S_x\text{-}R^d\text{-}Si(\text{-}R^b)_n(\text{-}R^c)_{3-n}$

Formula D: $Si(\text{-}O\text{-}(R^j\text{-}O)_p\text{-}R^k)_q(\text{-}R^h)_{3-q}\text{-}R^i\text{-}S_x\text{-}R^d\text{-}Si(\text{-}O\text{-}(R^e\text{-}O)_m\text{-}R^f)_n(\text{-}R^c)_{3-n}$

Formula E: $Si(\text{-}R^g)_q(\text{-}R^h)_{3-q}\text{-}R^i\text{-}S_x\text{-}R^d\text{-}Si(\text{-}O\text{-}(R^e\text{-}O)_m\text{-}R^f)_n(\text{-}R^c)_{3-n}$

In Formula A, $R^a$ represents a monovalent sulfur atom-containing group; $R^b$ independently represents an alkyl group; $R^c$ independently represents an alkyloxy group or a halogen atom; $R^d$ represents an alkylene group, an arylene group, or a combination thereof; and n represents an integer of 0 to 2.

In Formula B, $R^a$, $R^c$, $R^d$, and n have the same meanings as in Formula A; $R^e$ independently represents an alkylene group; $R^f$ independently represents an alkyl group; and m represents an integer of 1 to 5, preferably 1 to 3, and more preferably 1 to 2.

In Formula C, $R^b$, $R^c$, $R^d$, and n have the same meanings as in Formula A; $R^g$ independently represents an alkyl group; $R^h$ independently represents an alkyloxy group or a halogen atom; $R^i$ represents an alkylene group, an arylene group, or a combination thereof; q represents an integer of 0 to 2; and x represents an integer of 1 to 8, preferably 1 to 5, and more preferably 1 to 2.

In Formula D, $R^c$, $R^d$, and n have the same meanings as in Formula A; $R^e$, $R^f$, and m have the same meanings as in Formula B; $R^h$, q, and x have the same meanings as in Formula C; $R^j$ independently represents an alkylene group; $R^k$ independently represents an alkyl group; and p represents an integer of 1 to 5, preferably 1 to 3, and more preferably 1 to 2.

In Formula E, $R^c$, $R^d$, and n have the same meanings as in Formula A; $R^e$, $R^f$, and m have the same meanings as in Formula B; and $R^g$, $R^h$, $R^i$, q, and x have the same meanings as in Formula C.

$R^a$ is preferably a group selected from a thiol group, an alkylthio group optionally having one or more substituents, an arylthio group optionally having one or more substituents, an arylalkylthio group optionally having one or more substituents, an alkylarylthio group optionally having one or more substituents, an alkylcarbonylthio group optionally having one or more substituents, an arylcarbonylthio group optionally having one or more substituents, an alkyloxycarbonylthio group optionally having one or more substituents, and an aryloxycarbonylthio group optionally having one or more substituents. $R^a$ is more preferably a group selected from a thiol group and an alkylthio group optionally having one or more substituents. $R^a$ is still more preferably a thiol group.

Examples of the alkyl group represented by $R^b$, $R^f$, $R^g$, or $R^k$ include a methyl group, an ethyl group, a propyl group, and a butyl group.

Examples of the alkyloxy group or the halogen atom represented by $R^c$ or $R^h$ include a methoxy group, an ethoxy group, a propoxy group, a butoxy group, a chlorine atom, a bromine atom, and an iodine atom. The alkyloxy group represented by $R^c$ or $R^h$ is preferably a methoxy group or an ethoxy group. The halogen atom represented by $R^c$ or $R^h$ is preferably a chlorine atom.

Examples of the alkylene group represented by $R^d$, $R^e$, $R^i$, or $R^j$ include a methylene group, an ethylene group, a propylene group, and a butylene group.

Examples of the arylene group represented by $R^d$ or $R^i$ include a phenylene group, a naphthylene group, and a biphenylene group.

Examples of the combination of an alkylene group and an arylene group represented by $R^d$ or $R^i$ include groups represented by the formula: -X-Y-, the formula: -Y-X-, the formula: -X-Y-X-, and the formula: -Y-X-Y-. In the formulae, X represents an alkylene group, and Y represents an arylene group.

The alkylene group, the arylene group, or the combination thereof represented by $R^d$ or $R^i$ may optionally have one or more substituents.

Examples of the silane coupling agent represented by Formula A include 3-mercaptopropyltrimethoxysilane, 3-mercaptopropylmethyldimethoxysilane, and 3-mercaptopropyltriethoxysilane.

Examples of the silane coupling agent represented by Formula B include ethoxy(3-mercaptopropyl) bis(3,6,9,12,15-pentaoxaoctacosan-1-yloxy)silane.

Examples of the silane coupling agent represented by Formula C include bis(3-(triethoxysilyl)propyl)tetrasulfide and bis(3-(triethoxysilyl)propyl)disulfide.

In general, the greater the amount of functional groups introduced onto the surface of the adsorbent, the more the adsorption performance tends to improve. However, when introducing a sulfur atom-containing group onto the surface of the ceramic skeleton, if the amount of the introduced sulfur atom-containing group is too large, the adsorbent becomes highly hydrophobic. When the hydrophobicity of the adsorbent becomes high, a solution containing a target substance has difficulty reaching the interior of pores, and the introduced functional group cannot be effectively utilized, resulting in

decreased adsorption performance. Accordingly, from the viewpoint of effectively improving the adsorption performance of the adsorbent, the amount of the sulfur atom-containing group contained in the adsorbent, based on the mass of the adsorbent, is 0.5 mmol/g or more and 3.5 mmol/g or less. The amount of the sulfur atom-containing group contained in the adsorbent, based on the mass of the adsorbent, is preferably 1.0 mmol/g or more and 3.5 mmol/g or less, more preferably 1.0 mmol/g or more and 3.0 mmol/g or less, and still more preferably 1.5 mmol/g or more and 3.0 mmol/g or less.

The term "amount of the sulfur atom-containing group" refers to, in a case where the adsorbent contains one sulfur atom-containing group, the amount of the one sulfur atom-containing group, and, in a case where the adsorbent contains two or more sulfur atom-containing groups, the total amount of the two or more sulfur atom-containing groups. In addition, the term "amount of the sulfur atom-containing group" refers to the amount in terms of sulfur atoms. The amount of the sulfur atom-containing group can be measured according to a conventional method. For example, the amount of the sulfur atom-containing group can be measured by the method described in the Examples below.

The sulfur atom-containing group can adsorb one or more substances selected from the group consisting of transition metals including rare-earth metals; metals and metalloids of Groups 13 to 16; transition-metal ions including rare-earth metal ions; and metal ions and metalloid ions of Groups 13 to 16.

The transition metals and transition-metal ions include Ti, V, Cr, Mn, Fe, Co, Ni, Cu, Zr, Nb, Mo, Tc, Ru, Rh, Pd, Ag, Hf, Ta, W, Re, Os, Ir, Pt, Au, Zn, Cd, Hg, and rare-earth metals, and ions thereof.

The rare-earth metals and rare-earth metal ions include Sc, Y, La, Ce, Pr, Nd, Pm, Sm, Eu, Gd, Tb, Dy, Ho, Er, Tm, Yb, and Lu, and ions thereof.

The metals and metalloids of Groups 13 to 16 and ions thereof include B, Al, Si, Ga, Ge, As, Se, In, Sn, Sb, Te, Tl, Pb, Bi, Po, and At, and ions thereof. Among these, B, Si, Ge, As, Se, Po, At, Sb, and Te are metalloids.

From the viewpoint of further effectively improving the adsorption performance of the adsorbent, the target substance to be adsorbed on the sulfur atom-containing group is preferably at least one substance selected from the group consisting of Cu, Ag, Au, Pd, Pt, Bi, Se, and As.

<Water Absorption Rate>

When the hydrophobicity of an adsorbent is increased, a solution containing a target substance hardly reaches the inside of pores, and an introduced functional group cannot be effectively utilized, so that adsorption performance is degraded. Therefore, it is preferable that the adsorbent have low hydrophobicity, that is, high hydrophilicity.

The hydrophilicity of the adsorbent can be evaluated based on the water absorption rate of the adsorbent. As the water absorption rate of the adsorbent increases, the hydrophilicity of the adsorbent increases. From the viewpoint of effectively improving the adsorption performance of the adsorbent, the water absorption rate of the adsorbent is 8% or more. From the viewpoint of more effectively improving the adsorption performance of the adsorbent, the water absorption rate of the adsorbent is preferably 10% or more, more preferably 30% or more, still more preferably 50% or more, and still more preferably 100% or more. The upper limit of the water absorption rate is not particularly limited. The upper limit may be 500% or less, 400% or less, or 300% or less. These upper limit values may each be combined with any of the lower limit values described above.

The method for measuring the water absorption rate of the adsorbent is as follows. The adsorbent is dried under reduced pressure, and the weight of the adsorbent after drying under reduced pressure is measured. Specifically, the adsorbent is dried at 40°C for 1 hour under reduced pressure of 100 Pa or less, and the weight of the adsorbent after drying under reduced pressure is measured. Subsequently, 200 mg of the adsorbent after drying under reduced pressure is placed in a mesh basket and suspended in a 200-mL beaker containing 125 mL of pure water. At this time, the mesh basket is suspended in the beaker so that the entire adsorbent is immersed in the pure water. Subsequently, the pure water in the beaker is stirred at 25°C and 350 rpm for 30 minutes. After stirring, the mesh basket is taken out, and water adhering to the mesh basket is wiped off so that the adsorbent does not come into contact with water after being taken out. Subsequently, the weight of the adsorbent after immersion is measured, and the water absorption rate is calculated based on the following formula.

Water absorption rate (%) = {(weight of adsorbent after immersion) - (weight of adsorbent after drying under reduced pressure)} / (weight of adsorbent after drying under reduced pressure) $\times$ 100

As described above, when the sulfur atom-containing group is introduced onto the surface of a ceramic skeleton, if the amount of the introduced sulfur atom-containing group is excessively large, the hydrophobicity of the adsorbent is increased and the adsorption performance is degraded. Therefore, the amount of the sulfur atom-containing group contained in the adsorbent is adjusted to 0.5 mmol/g or more and 3.5 mmol/g or less, based on the mass of the adsorbent. However, merely adjusting the amount of the sulfur atom-containing group contained in the adsorbent to the above-described range makes it difficult to achieve the above-described desired water absorption rate. The above-described

desired water absorption rate can be easily achieved by adjusting the amount of the sulfur atom-containing group contained in the adsorbent to the above-described range and, in the method for producing the adsorbent, bringing a porous body into contact with a reagent for modifying the surface of the ceramic skeleton with the sulfur atom-containing group in water, or bringing the porous body into contact with the reagent in an aqueous solution having a pH of 1 to 12, or bringing the porous body into contact with the reagent in a mixed solution of an organic solvent and either an aqueous solution having a pH of 1 to 12 or water, in which a ratio of a volume of the organic solvent to a volume of the aqueous solution or water is 0.5 or less. The method for producing the adsorbent will be described below.

<<Adsorbent Production Method>>

The adsorbent production method of the present invention is a method for producing an adsorbent including a porous body having a co-continuous structure formed of: a ceramic skeleton including mesopores; and macropores, and a sulfur atom-containing group that modifies a surface of the ceramic skeleton. The method includes a step of bringing the porous body and a reagent for modifying the surface of the ceramic skeleton with the sulfur atom-containing group into contact with each other in a solvent.

As the reagent for modifying the surface of the ceramic skeleton with the sulfur atom-containing group, a compound having at least one sulfur atom-containing group, preferably a silane coupling agent having at least one sulfur atom-containing group, and more preferably a silane coupling agent represented by Formula A, Formula B, Formula C, Formula D, or Formula E, can be used. One reagent may be used, or two or more reagents may be used.

In the step of bringing the porous body and the reagent for modifying the surface of the ceramic skeleton with the sulfur atom-containing group into contact with each other in a solvent, the surface of the ceramic skeleton can be modified with the sulfur atom-containing group by heating a mixture containing the porous body, the reagent, and the solvent at, for example, 40°C to 100°C, preferably 60°C to 100°C, and more preferably 80°C to 100°C, for, for example, 1 hour to 12 hours, preferably 2 hours to 10 hours, and more preferably 4 hours to 8 hours. After modifying the surface of the ceramic skeleton with the sulfur atom-containing group, the adsorbent is separated from the mixture using a solid-liquid separation method such as filtration, washed with a washing liquid such as pure water, and then dried, thereby obtaining the adsorbent as the final product.

The solvent used when bringing the porous body and the reagent for modifying the surface of the ceramic skeleton with the sulfur atom-containing group into contact with each other is water, an aqueous solution having a pH of 1 to 12, or a mixed solution of an organic solvent and either an aqueous solution having a pH of 1 to 12 or water, wherein a ratio of a volume of the organic solvent to a volume of the aqueous solution or water is 0.5 or less. This allows the reaction of modifying the surface of the ceramic skeleton with the sulfur atom-containing group to proceed rapidly.

Examples of water include pure water, ion-exchanged water, distilled water, and reverse-osmosis (RO) water.

From the viewpoint of efficiently modifying the surface of the ceramic skeleton with the sulfur atom-containing group, the aqueous solution having a pH of 1 to 12 is preferably an aqueous solution having a pH of 2 to 10, and more preferably an aqueous solution having a pH of 3 to 7.

The aqueous solution having a pH of 1 to 12 can be prepared by adding an acid or a base to pure water. Examples of the acid added include acetic acid, hydrochloric acid, nitric acid, sulfuric acid, and phosphoric acid. The acid is preferably acetic acid. Examples of the base added include sodium hydroxide, potassium hydroxide, sodium carbonate, sodium hydrogen carbonate, ammonia, trimethylamine, and triethylamine. The base added is preferably selected from sodium hydroxide, potassium hydroxide, sodium carbonate, and sodium hydrogen carbonate. In one embodiment, the aqueous solution having a pH of 1 to 12 is an acetic acid aqueous solution.

In a case where a mixed solution of an organic solvent and either an aqueous solution having a pH of 1 to 12 or water is used as the solvent when bringing the porous body and the reagent for modifying the surface of the ceramic skeleton with the sulfur atom-containing group into contact with each other, if a ratio of a volume of the organic solvent to a volume of the aqueous solution or water in the mixed solution increases, the hydrophobicity of the resulting adsorbent increases and the adsorption performance decreases. Accordingly, from the viewpoint of increasing the hydrophilicity (i.e., water absorption rate) of the resulting adsorbent, it is preferable that the volume ratio of the organic solvent to the aqueous solution or water in the mixed solution be small. Specifically, the ratio is 0.5 or less. The ratio is preferably 0.3 or less, and more preferably 0.1 or less. The lower limit value is not particularly limited as long as it is greater than 0. The "volume of the organic solvent" refers to, in a case where the mixed solution contains one organic solvent, the volume of the one organic solvent, and in a case where the mixed solution contains two or more organic solvents, the total volume of the two or more organic solvents. Note that the aqueous solution having a pH of 1 to 12 does not contain an organic solvent. Therefore, the ratio of the volume of the organic solvent to the volume of the aqueous solution in the aqueous solution having a pH of 1 to 12 is 0.

Examples of the organic solvent include alcohol-based solvents such as monohydric alcohols (for example, chain aliphatic alcohols such as methanol, ethanol, n-propanol, and 2-propanol; alicyclic aliphatic alcohols such as cyclobutanol, cyclopentanol, and cyclohexanol; and aromatic alcohols such as benzyl alcohol and phenylethyl alcohol),

dihydric alcohols (for example, ethylene glycol, diethylene glycol, propylene glycol, and dipropylene glycol), and polyhydric alcohols (for example, glycerin, diglycerin, triglycerin, and tetraglycerin); polyhydric alcohol derivatives such as ethylene glycol monomethyl ether, ethylene glycol monoethyl ether, propylene glycol monomethyl ether, and propylene glycol monoethyl ether; ether-based solvents such as tetrahydrofuran, 2-methyl-tetrahydrofuran, cyclopentyl methyl ether, dibutyl ether, 1,4-dioxane, methyl tert-butyl ether, diisopropyl ether, dimethoxyethane, and diglyme; ketone-based solvents such as acetone, methyl ethyl ketone, and diethyl ketone; ester-based solvents such as methyl acetate and ethyl acetate; halogenated hydrocarbon-based solvents such as dichloromethane, chloroform, carbon tetrachloride, 1,2-dichloroethane, and chlorobenzene; aromatic hydrocarbon-based solvents such as toluene and xylene; and aliphatic hydrocarbon-based solvents such as hexane and heptane. In one embodiment, the mixed solution of an organic solvent and either an aqueous solution having a pH of 1 to 12 or water is a mixed solution of ethanol and either an aqueous solution having a pH of 1 to 12 or water.

According to the adsorbent production method of the present invention, an adsorbent having high hydrophilicity (i.e., a high water absorption rate) can be obtained. Accordingly, the adsorbent production method of the present invention is suitable for producing the adsorbent of the present invention.

<<Effects and Applications of Adsorbent>>

The adsorbent of the present invention has excellent adsorption performance due to the effect of the co-continuous structure formed of: a ceramic skeleton including mesopores; and macropores, the effect of the amount of the sulfur atom-containing group being 0.5 mmol/g to 3.5 mmol/g, and the effect of the water absorption rate being 8% or more. The adsorption performance can be evaluated based on an adsorption ratio calculated from the amount of a target substance adsorbed on the adsorbent when the adsorbent is brought into contact with a solution containing the target substance (the adsorption ratio meaning the percentage of the amount of the target substance adsorbed on the adsorbent relative to the initial amount of the target substance in the solution). The adsorption performance may also be evaluated based on an adsorption rate calculated by dividing the amount of the target substance adsorbed on the adsorbent after contacting the adsorbent with a solution containing the target substance for a predetermined time by the predetermined time.

The adsorbent of the present invention is useful as an adsorbent for adsorbing one or more target substances selected from the group consisting of metals, metal ions, metalloids, and metalloid ions, and can be used for recovering one or more target substances.

The one or more target substances may be selected from, for example, the group consisting of transition metals including rare-earth metals; metals and metalloids of Groups 13 to 16; transition-metal ions including rare-earth metal ions; and metal ions and metalloid ions of Groups 13 to 16. Among these, from the viewpoint of the high demand for adsorption recovery, the one or more target substances are preferably selected from the group consisting of transition metals excluding rare-earth metals; metals and metalloids of Groups 13 to 16; and ions of these metals and metalloids. Examples of the forms of metals and metalloids adsorbed on the adsorbent of the present invention include metal nanoparticles and metalloid nanoparticles. The metals, metalloids, metal ions, and metalloid ions adsorbed on the adsorbent of the present invention may each have a ligand or may not have a ligand.

<<Target Substance Recovery Method>>

The target substance recovery method of the present invention is a method for recovering one or more target substances selected from the group consisting of metals, metal ions, metalloids, and metalloid ions from a solution containing one or more target substances (hereinafter referred to as "liquid to be treated"), and includes a step of bringing the liquid to be treated into contact with the adsorbent of the present invention.

When the liquid to be treated is brought into contact with the adsorbent of the present invention, one or more target substances contained in the liquid to be treated are adsorbed onto the adsorbent of the present invention. As a result, one or more target substances can be recovered from the liquid to be treated.

Examples of the liquid to be treated include waste liquids discharged from plants and wastewater containing valuable metals discharged in metal refining processes. The liquid to be treated usually contains water. The waste liquid or wastewater may be subjected to pretreatment as needed before being brought into contact with the adsorbent of the present invention.

The one or more target substances contained in the liquid to be treated may be selected from, for example, the group consisting of transition metals including rare-earth metals; metals and metalloids of Groups 13 to 16; transition-metal ions including rare-earth metal ions; and metal ions and metalloid ions of Groups 13 to 16. Among these, from the viewpoint of the high demand for adsorption recovery, the one or more target substances are preferably selected from the group consisting of transition metals excluding rare-earth metals; metals and metalloids of Groups 13 to 16; and ions of these metals and metalloids.

Examples of methods for bringing the liquid to be treated into contact with the adsorbent of the present invention include a method of immersing the adsorbent of the present invention in the liquid to be treated, and a method of passing the liquid to be treated through a column packed with the adsorbent of the present invention. The liquid can be passed, for example, using a liquid-feeding pump.

The adsorbent of the present invention is particularly useful when recovering each target substance from a liquid to be treated in which the concentration of each target substance is low (for example, 0.1 ppm or more and 5000 ppm or less, particularly 0.1 ppm or more and 100 ppm or less).

## EXAMPLES

Hereinafter, the present invention will be further specifically described with reference to Examples and Comparative Examples; however, the scope of the present invention is not limited to these Examples and Comparative Examples.

### [**Example 1**]

(1) Production of silica monolith

To a 150 mL reaction vessel, 8.67 g of polyethylene glycol 10000 (manufactured by SIGMA-ALDRICH Co., LLC), 7.80 g of urea, and 86.7 g of an acetic acid aqueous solution (acetic acid concentration: 6.06 % by mass) were added, and stirred at room temperature for 10 minutes. The reaction vessel was placed in an ice bath, and the reaction solution was cooled with stirring for 15 minutes. To the cooled reaction solution, 44.7 g of tetramethoxysilane was added, and stirred for 30 minutes while being cooled in the ice bath. The reaction solution was warmed in a warm bath at 30°C, and then allowed to stand overnight in an incubator at 30°C to thereby produce a polysiloxane gel.

Next, the obtained polysiloxane gel was added to another reaction vessel containing 30 mL of 3 mol/L aqueous urea solution, and heated and refluxed for 12 hours. After completion of the reaction, the obtained polysiloxane gel was washed with water, and dried in a dryer set at 60°C for 12 hours. After drying, the polysiloxane gel was fired at 600°C for 5 hours in an air atmosphere to produce a silica monolith. The obtained silica monolith was pulverized and classified to obtain a silica monolith having a particle size of 100 μm or more and 300 μm or less.

(2) Observation with scanning electron microscope

The surface structure of the silica monolith obtained in (1) above was observed using a scanning electron microscope (JSM-7900F manufactured by JEOL Ltd.). As a result, it was confirmed that the silica monolith has a co-continuous structure formed of a silica skeleton and macropores.

(3) Measurement of specific surface area and most frequent pore diameter of mesopores

The specific surface area and the most frequent pore diameter of mesopores of the silica monolith obtained in (1) above were measured using a specific surface area/pore distribution measuring apparatus (BELSORP-miniX manufactured by Microtrac-BEL Corp.). After degassing the silica monolith under reduced pressure at 400°C for 3 hours, the amounts of adsorption and desorption of nitrogen at a temperature of 77 K using liquid nitrogen were measured by a multipoint method, thereby determining an adsorption-desorption isotherm. Based on the adsorption-desorption isotherm, the specific surface area and the most frequent pore diameter were calculated. The specific surface area was calculated by the BET method, and the most frequent pore diameter was calculated by the BJH method.

The BJH method is a method of analyzing the distribution of pore volume with respect to pore diameter under the assumption that pores are cylindrical according to the standard model of Barrett-Joyner-Halenda (for details, see J. Amer. Chem. Soc., 73, 373, 1951). In the present invention, the analysis was conducted in the pore diameter range of 2 to 200 nm.

(4) Measurement of total pore volume, most frequent pore diameter of macropores, and porosity

The total pore volume, most frequent pore diameter of macropores, and porosity of the silica monolith obtained in (1) above were measured using a mercury porosimeter (AutoPore IV 9520 manufactured by Micromeritics Instrument Corporation) by the mercury intrusion method. In the mercury intrusion method, mercury was allowed to penetrate into pores of the silica monolith by applying pressure, the pore volume and the specific surface area were determined from the pressure and the amount of mercury intruded, and the pore diameter was calculated based on the relationship between the pore volume and the specific surface area under the assumption that pores are cylindrical. In the present invention, the analysis was conducted in the pore diameter range of 50 nm to 500 μm by the mercury intrusion method. The

measurements were conducted under the following conditions and procedures.

(Measurement conditions)

- Mercury parameters

  Advancing contact angle: 130.0°
  Receding contact angle: 130.0°
  Surface tension: 485.0 mN/m (485.0 dynes/cm)
  Mercury density: 13.5335 g/mL

- Low-pressure parameters

  Discharge pressure: 50 μmHg
  Discharge time: 5.0 minutes
  Mercury intrusion pressure: 0.0035 MPa
  Equilibrium time: 10 seconds

- High-pressure parameters
  Equilibrium time: 10 seconds
- Intrusion volume: modulated to 25% or more and 90% or less
- Measurement environment: 20°C

(Measurement procedure)

(i) Weigh about 0.5 g of a sample, place it in a specimen cell, and input a weighed value.
(ii) Measure in the pressure range of 0.0048 to 0.2068 MPa at a low-pressure portion.
(iii) Measure in the pressure range of 0.2068 to 255.1060 MPa at a high-pressure portion.
(ii) and (iii) were automatically performed using the software provided with the apparatus.

The results of (3) and (4) above are shown in Table 1.

[Table 1]

| | | Before Surface Modification | | | | | |
|---|---|---|---|---|---|---|---|
| | | Specific surface area ($m^2/g$) | Most frequent pore diameter of macropores (nm) | Most frequent pore diameter of mesopores (nm) | Most frequent pore diameter of macropores / Most frequent pore diameter of mesopores | Total pore volume (mL) | Porosity (%) |
| Examples | 1 | 333 | 1284 | 19 | 67.6 | 3.4 | 82.4 |
| | 2 | 333 | 1284 | 19 | 67.6 | 3.4 | 82.4 |
| | 3 | 333 | 1284 | 19 | 67.6 | 3.4 | 82.4 |
| | 4 | 333 | 1284 | 19 | 67.6 | 3.4 | 82.4 |
| | 5 | 333 | 1284 | 19 | 67.6 | 3.4 | 82.4 |
| | 6 | 333 | 1284 | 19 | 67.6 | 3.4 | 82.4 |
| | 7 | 610 | 313 | 13 | 24.1 | 2.9 | 79.6 |
| | 8 | 293 | 4636 | 18 | 257.6 | 3.3 | 82.7 |
| | 9 | 352 | 455 | 12 | 38.0 | 2.8 | 79.8 |
| | 10 | 248 | 609 | 32 | 19.0 | 2.9 | 79.4 |
| Comparative Examples | 1 | 333 | 1284 | 19 | 67.6 | 3.4 | 82.4 |
| | 2 | 333 | 1284 | 19 | 67.6 | 3.4 | 82.4 |
| | 3 | 333 | 1284 | 19 | 67.6 | 3.4 | 82.4 |
| | 4 | - | - | - | - | - | - |
| | 5 | - | - | - | - | - | - |
| | 6 | - | - | - | - | - | - |

(5) Production of thiol-containing silica monolith adsorbent

To a reaction vessel, 4.08 g of 3-mercaptopropyltrimethoxysilane, which had been stirred at room temperature for 1 hour, 35 mL of an acetic acid aqueous solution (pH 3.3), and 5.0 g of the silica monolith obtained in (1) above were added. After allowing the mixture to stand at room temperature for 30 minutes, the mixture was heated at 80°C for 4 hours, thereby

producing a thiol-containing silica monolith adsorbent. The thiol-containing silica monolith adsorbent was separated from the solution by filtration, washed with 500 mL of pure water, and dried to obtain 6.89 g of a thiol-containing silica monolith adsorbent.

(6) Measurement of amount of sulfur atom-containing group

The amount of a sulfur atom-containing group contained in the thiol-containing silica monolith adsorbent obtained in (5) above was quantitatively determined using a carbon-sulfur analyzer (EMIA-Expert manufactured by HORIBA, Ltd.). The amount of sulfur atoms was defined as the amount of thiol groups.

(7) Measurement of water absorption rate

The thiol-containing silica monolith adsorbent obtained in (5) above was dried under reduced pressure, and the weight of the adsorbent after drying under reduced pressure was measured. Specifically, the adsorbent was dried at 40°C for 1 hour under reduced pressure of 100 Pa or less, and the weight of the adsorbent after drying under reduced pressure was measured. Subsequently, 200 mg of the adsorbent after drying under reduced pressure was placed in a mesh basket and suspended in a 200 mL beaker containing 125 mL of pure water. At this time, the mesh basket was suspended in the beaker so that the entire adsorbent was immersed in the pure water. Subsequently, the pure water in the beaker was stirred at 25°C and 350 rpm for 30 minutes. After stirring, the mesh basket was taken out, and water adhering to the mesh basket was wiped off with a paper wiper. Subsequently, the weight of the adsorbent after immersion was measured, and the water absorption rate was calculated based on the following formula.

Water absorption rate (%) = { (weight of adsorbent after immersion) - (weight of adsorbent after drying under reduced pressure) } / (weight of adsorbent after drying under reduced pressure) × 100

The results of (6) and (7) above are shown in Table 2.

[Table 2]

| | | After Surface Modification | |
|---|---|---|---|
| | | Amount of thiol groups (mmol/g) | Water absorption rate (%) |
| Examples | 1 | 2.1 | 193 |
| | 2 | 0.8 | 260 |
| | 3 | 1.2 | - |
| | 4 | 1.7 | 204 |
| | 5 | 2.5 | - |
| | 6 | 3.1 | 137 |
| | 7 | 2.2 | - |
| | 8 | 1.9 | - |
| | 9 | 2.3 | - |
| | 10 | 2.5 | - |
| Comparative Examples | 1 | 0.4 | 254 |
| | 2 | 4.1 | 5 |
| | 3 | 1.8 | 6 |
| | 4 | 1.4 | - |
| | 5 | 0.6 | - |
| | 6 | 3.1 | - |

60 mg of the thiol-containing silica monolith adsorbent obtained in (5) above was immersed in 30 mL of an aqueous solution (Pd 100 ppm, pH = 1) prepared by diluting a palladium standard solution (Pd1000) (manufactured by KANTO CHEMICAL CO., INC.) 10-fold with dilute nitric acid, and the mixture was stirred at 25°C for 1 hour. After completion of the reaction, the silica monolith adsorbent was separated by filtration, and the amount of palladium element contained in the resulting filtrate was analyzed using an ICP optical emission spectrometer (SPECTROGREEN FMD46 manufactured by Hitachi High-Tech Science Corporation). For the palladium element, the percentage of the amount of the palladium element adsorbed on the silica monolith adsorbent relative to the amount of the palladium element initially contained in the aqueous solution (hereinafter referred to as "adsorption ratio of palladium element") was calculated. The calculated adsorption ratios of palladium element are shown in Table 3. In Table 3, the adsorption ratio of palladium element is denoted as "Pd adsorption ratio".

60 mg of the thiol-containing silica monolith adsorbent obtained in (5) above was immersed in 30 mL of an aqueous solution (Bi 100 ppm, pH = 1) prepared by diluting a bismuth standard solution (Bi1000) (manufactured by KANTO CHEMICAL CO., INC.) 10-fold with dilute nitric acid, and the mixture was stirred at 25°C for 1 hour. After completion of the reaction, the silica monolith adsorbent was separated by filtration, and the amount of bismuth element contained in the resulting filtrate was analyzed using an ICP optical emission spectrometer (SPECTROGREEN FMD46 manufactured by Hitachi High-Tech Science Corporation). The adsorption ratio of bismuth element was calculated in the same manner as for the adsorption ratio of palladium element, and the results are shown in Table 3. In Table 3, the adsorption ratio of bismuth element is denoted as "Bi adsorption ratio".

60 mg of the thiol-containing silica monolith adsorbent obtained in (5) above was immersed in 30 mL of an aqueous solution (As 10 ppm, pH = 1) prepared by diluting an arsenic standard solution (As1000) (manufactured by KANTO CHEMICAL CO., INC.) 100-fold with dilute hydrochloric acid, and the mixture was stirred at 25°C for 1 hour. After completion of the reaction, the silica monolith adsorbent was separated by filtration, and the amount of arsenic element contained in the resulting filtrate was analyzed using an ICP optical emission spectrometer (SPECTROGREEN FMD46 manufactured by Hitachi High-Tech Science Corporation). The adsorption ratio of arsenic element was calculated in the same manner as for the adsorption ratio of palladium element, and the results are shown in Table 3. In Table 3, the adsorption ratio of arsenic element is denoted as "As adsorption ratio".

60 mg of the thiol-containing silica monolith adsorbent obtained in (5) above was immersed in 30 mL of an aqueous solution (Se 10 ppm, pH = 1) prepared by diluting a selenium standard solution (Se1000) (manufactured by

KANTO CHEMICAL CO., INC.) 100-fold with dilute nitric acid, and the mixture was stirred at 25°C for 1 hour. After completion of the reaction, the silica monolith adsorbent was separated by filtration, and the amount of selenium element contained in the resulting filtrate was analyzed using an ICP optical emission spectrometer (SPECTROGREEN FMD46 manufactured by Hitachi High-Tech Science Corporation). The adsorption ratio of selenium element was calculated in the same manner as for the adsorption ratio of palladium element, and the results are shown in Table 3. In Table 3, the adsorption ratio of selenium element is denoted as "Se adsorption ratio".

[Table 3]

| | | Adsorption test results | | | |
|---|---|---|---|---|---|
| | | Pd adsorption ratio (%) | Bi adsorption ratio (%) | As adsorption ratio (%) | Se adsorption ratio (%) |
| Examples | 1 | 99 | >99 | >99 | >99 |
| | 2 | >99 | 94 | >99 | >99 |
| | 3 | >99 | 98 | >99 | >99 |
| | 4 | >99 | 98 | >99 | >99 |
| | 5 | 90 | >99 | 96 | >99 |
| | 6 | >99 | 96 | 99 | 99 |
| | 7 | >99 | 98 | >99 | >99 |
| | 8 | 93 | 96 | 99 | >99 |
| | 9 | >99 | >99 | >99 | 99 |
| | 10 | >99 | 98 | >99 | >99 |
| Comparative Examples | 1 | 86 | 58 | 97 | >99 |
| | 2 | 21 | 25 | 58 | 58 |
| | 3 | 68 | 62 | 12 | 35 |
| | 4 | 45 | 69 | 24 | 13 |
| | 5 | 68 | 56 | 98 | 98 |
| | 6 | 1 | 8 | 66 | 19 |

**[Example 2]**

The same operation as in Example 1 was performed, except that the amount of 3-mercaptopropyltrimethoxysilane used in the production of the adsorbent was changed to 1.02 g, thereby producing and evaluating a thiol-containing silica monolith adsorbent. The results are shown in Tables 1 to 3.

**[Example 3]**

The same operation as in Example 1 was performed, except that the amount of 3-mercaptopropyltrimethoxysilane used in the production of the adsorbent was changed to 2.04 g, thereby producing and evaluating a thiol-containing silica monolith adsorbent. The results are shown in Tables 1 to 3. Since the water absorption rate was not measured, these items are indicated by "-" in Table 2; however, based on the results of Examples 2 and 4, the water absorption rate is presumed to be 8% or more.

[**Example 4**]

The same operation as in Example 1 was performed, except that the amount of 3-mercaptopropyltrimethoxysilane used in the production of the adsorbent was changed to 3.06 g, thereby producing and evaluating a thiol-containing silica monolith adsorbent. The results are shown in Tables 1 to 3.

[**Example 5**]

The same operation as in Example 1 was performed, except that the amount of 3-mercaptopropyltrimethoxysilane used in the production of the adsorbent was changed to 5.11 g, thereby producing and evaluating a thiol-containing silica monolith adsorbent. The results are shown in Tables 1 to 3. Since the water absorption rate was not measured, these items are indicated by "-" in Table 2; however, based on the results of Examples 1 and 4, the water absorption rate is presumed to be 8% or more.

[**Example 6**]

The same operation as in Example 1 was performed, except that the amount of 3-mercaptopropyltrimethoxysilane used in the production of the adsorbent was changed to 7.15 g, thereby producing and evaluating a thiol-containing silica monolith adsorbent. The results are shown in Tables 1 to 3.

[**Example 7**]

The same operation as in Example 1 was performed, except that the amount of polyethylene glycol 10000 (manufactured by SIGMA-ALDRICH Co., LLC) used in the production of the silica monolith was changed to 9.97 g, thereby producing and evaluating a thiol-containing silica monolith adsorbent. The results are shown in Tables 1 to 3. Since the water absorption rate was not measured, these items are indicated by "-" in Table 2; however, based on the results of Example 1, the water absorption rate is presumed to be 8% or more.

[**Example 8**]

The same operation as in Example 1 was performed, except that the amount of polyethylene glycol 10000 (manufactured by SIGMA-ALDRICH Co., LLC) used in the production of the silica monolith was changed to 7.08 g, thereby producing and evaluating a thiol-containing silica monolith adsorbent. The results are shown in Tables 1 to 3. Since the water absorption rate was not measured, these items are indicated by "-" in Table 2; however, based on the results of Example 1, the water absorption rate is presumed to be 8% or more.

[**Example 9**]

The same operation as in Example 1 was performed, except that the heating and reflux time in 3 mol/L aqueous urea solution during the production of the silica monolith was changed to 5 hours, thereby producing and evaluating a thiol-containing silica monolith adsorbent. The results are shown in Tables 1 to 3. Since the water absorption rate was not measured, these items are indicated by "-" in Table 2; however, based on the results of Example 1, the water absorption rate is presumed to be 8% or more.

[**Example 10**]

The same operation as in Example 1 was performed, except that the heating and reflux time in 3 mol/L aqueous urea solution during the production of the silica monolith was changed to 24 hours, thereby producing and evaluating a thiol-containing silica monolith adsorbent. The results are shown in Tables 1 to 3. Since the water absorption rate was not measured, these items are indicated by "-" in Table 2; however, based on the results of Example 1, the water absorption rate is presumed to be 8% or more.

[**Comparative Example 1**]

The same operation as in Example 1 was performed, except that the amount of 3-mercaptopropyltrimethoxysilane used in the production of the adsorbent was changed to 0.51 g, thereby producing and evaluating a thiol-containing silica monolith adsorbent. The results are shown in Tables 1 to 3.

[**Comparative Example 2**]

The same operation as in Example 1 was performed, except that the amount of 3-mercaptopropyltrimethoxysilane used in the production of the adsorbent was changed to 12.25 g, thereby producing and evaluating a thiol-containing silica monolith adsorbent. The results are shown in Tables 1 to 3.

[**Comparative Example 3**]

The same operation as in Example 1 was performed, except that the acetic acid aqueous solution (pH 3.3) was replaced with a mixed solution of ethanol and an acetic acid aqueous solution (pH 3.3) at a volume ratio of 1:1, thereby producing and evaluating a thiol-containing silica monolith adsorbent. The results are shown in Tables 1 to 3.

[**Comparative Example 4**]

The same evaluation as in Example 1 was conducted using a commercially available thiol-containing silica, SiliaMetS Thiol (SH) Metal Scavenger (manufactured by SiliCycle Inc.). The results are shown in Tables 1 to 3. SiliaMetS Thiol (SH) Metal Scavenger does not have a co-continuous structure. Since the specific surface area, most frequent pore diameter of macropores, most frequent pore diameter of mesopores, total pore volume, porosity, and water absorption rate were not measured, these items are indicated by "-" in Tables 1 and 2.

[**Comparative Example 5**]

The same operation as in Example 4 was performed, except that 5.0 g of commercially available silica, Wakogel C-200 (manufactured by FUJIFILM Wako Pure Chemical Corporation), was used instead of the silica monolith produced in Example 1, thereby producing and evaluating a thiol-containing silica adsorbent. Wakogel C-200 does not have a co-continuous structure. The results are shown in Tables 1 to 3. Since the specific surface area, most frequent pore diameter of macropores, most frequent pore diameter of mesopores, total pore volume, porosity, and water absorption rate were not measured, these items are indicated by "-" in Tables 1 and 2.

[**Comparative Example 6**]

The same operation as in Comparative Example 2 was performed, except that 5.0 g of commercially available silica, Wakogel C-200 (manufactured by FUJIFILM Wako Pure Chemical Corporation), was used instead of the silica monolith produced in Example 1, thereby producing and evaluating a thiol-containing silica adsorbent. The results are shown in Tables 1 to 3. Since the specific surface area, most frequent pore diameter of macropores, most frequent pore diameter of mesopores, total pore volume, porosity, and water absorption rate were not measured, these items are indicated by "-" in Tables 1 and 2.

DESCRIPTION OF REFERENCE SIGNS

1 Ceramic skeleton
2 Macropores
3 Mesopores

**Claims**

**1.** An adsorbent comprising:

a porous body having a co-continuous structure formed of: a ceramic skeleton comprising mesopores; and macropores; and
a sulfur atom-containing group that modifies a surface of the ceramic skeleton,
wherein an amount of the sulfur atom-containing group contained in the adsorbent is 0.5 mmol/g or more and 3.5 mmol/g or less, and
wherein a water absorption rate of the adsorbent is 8% or more.

**2.** The adsorbent according to claim 1, wherein the sulfur atom-containing group comprises a thiol group.

3. The adsorbent according to claim 1 or 2, wherein a most frequent pore diameter of the macropores of the porous body is 200 nm or more and 5000 nm or less.

4. The adsorbent according to claim 1 or 2, wherein a ratio of a most frequent pore diameter of the macropores of the porous body to a most frequent pore diameter of the mesopores of the porous body is 15 or more and 300 or less.

5. The adsorbent according to claim 1 or 2, wherein the ceramic skeleton comprises an element selected from silicon, aluminum, tin, cerium, titanium, and zirconium.

6. The adsorbent according to claim 1 or 2, wherein the sulfur atom-containing group is capable of adsorbing one or more substances selected from the group consisting of transition metals including rare-earth metals; metals and metalloids of Groups 13 to 16; transition-metal ions including rare-earth metal ions; and metal ions and metalloid ions of Groups 13 to 16.

7. A method for recovering one or more target substances selected from the group consisting of metals, metal ions, metalloids, and metalloid ions from a solution containing the one or more target substances,
the method comprising a step of bringing the solution into contact with the adsorbent according to claim 1 or 2.

8. The method according to claim 7, wherein the one or more target substances are selected from the group consisting of transition metals including rare-earth metals; metals and metalloids of Groups 13 to 16; transition-metal ions including rare-earth metal ions; and metal ions and metalloid ions of Groups 13 to 16.

9. A method for producing an adsorbent comprising:

a porous body having a co-continuous structure formed of: a ceramic skeleton comprising mesopores; and macropores; and
a sulfur atom-containing group that modifies a surface of the ceramic skeleton,
the method comprising a step of bringing the porous body and a reagent for modifying the surface of the ceramic skeleton with the sulfur atom-containing group into contact with each other in a solvent,
wherein the solvent is water, or an aqueous solution having a pH of 1 to 12, or a mixed solution of an organic solvent and either an aqueous solution having a pH of 1 to 12 or water, wherein a ratio of a volume of the organic solvent in the mixed solution to a volume of the aqueous solution or water in the mixed solution is 0.5 or less.

3
1
3
2
1
2
3
2
1
3
1
3
2
1
2
3
1
3
3
1
3
3
2
1
3
1
3
3
2
1
3
3
2
3
1
2
3
1
3

[FIG. 1]

## INTERNATIONAL SEARCH REPORT

International application No.
**PCT/JP2024/037653**

### A. CLASSIFICATION OF SUBJECT MATTER

***B01J 20/10***(2006.01)i; ***B01D 15/00***(2006.01)i; ***B01J 20/06***(2006.01)i; ***B01J 20/08***(2006.01)i; ***B01J 20/28***(2006.01)i; ***B01J 20/30***(2006.01)i; ***C01B 33/18***(2006.01)i
FI: B01J20/10 C; B01J20/08 C; B01J20/06 B; B01J20/28 Z; B01D15/00 N; B01J20/30; C01B33/18 Z

According to International Patent Classification (IPC) or to both national classification and IPC

### B. FIELDS SEARCHED

Minimum documentation searched (classification system followed by classification symbols)

B01J20/10; B01D15/00; B01J20/06; B01J20/08; B01J20/28; B01J20/30; C01B33/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2023/190445 A1 (MITSUI MINING & SMELTING CO., LTD.) 05 October 2023 (2023-10-05) paragraphs [0198], [0207], tables 1, 2 | 1-9 |
| Y | WO 2022/163833 A1 (MITSUI MINING & SMELTING CO., LTD.) 04 August 2022 (2022-08-04) claims, paragraphs [0192]-[0195], [0114] | 1-9 |
| Y | WO 2022/163832 A1 (MITSUI MINING & SMELTING CO., LTD.) 04 August 2022 (2022-08-04) claims, paragraphs [0176]-[0179] | 1-9 |
| Y | JP 2020-164682 A (ASAHI KASEI KABUSHIKI KAISHA) 08 October 2020 (2020-10-08) paragraphs [0017], [0033]-[0034] | 1-9 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 December 2024** | **17 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/037653**

| Patent document cited in search report | Publication date (day/month/year) | Patent family member(s) | Publication date (day/month/year) |
|---|---|---|---|
| WO 2023/190445 A1 | 05 October 2023 | (Family: none) | |
| WO 2022/163833 A1 | 04 August 2022 | US 2024/0165582 A1<br>claims, paragraphs [0222]-[0225], [0138]<br>EP 4286331 A1<br>CN 116761782 A<br>KR 10-2023-0137904 A | |
| WO 2022/163832 A1 | 04 August 2022 | US 2024/0157330 A1<br>claims, paragraphs [0199]-[0202]<br>EP 4286332 A1<br>CN 116806208 A<br>KR 10-2023-0132794 A | |
| JP 2020-164682 A | 08 October 2020 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017002871 A

### Non-patent literature cited in the description

- *J. Amer. Chem. Soc*, 1951, vol. 73, 373